(19) Europäisches Patentamt
European Patent Office
Office européen des brevets

(11) **EP 2 303 534 B1**

(12) **EUROPEAN PATENT SPECIFICATION**

(45) Date of publication and mention
of the grant of the patent:
**01.01.2020 Bulletin 2020/01**

(51) Int Cl.:
***B29B 17/00*** *(2006.01)*

(21) Application number: **09758549.1**

(22) Date of filing: **03.06.2009**

(86) International application number:
**PCT/NL2009/000127**

(87) International publication number:
**WO 2009/148302 (10.12.2009 Gazette 2009/50)**

(54) **METHOD FOR RECYCLING USED CLOTHES AND DOMESTIC TEXTILE**

VERFAHREN ZUR WIEDERVERWERTUNG VON GEBRAUCHTER KLEIDUNG UND VON HAUSHALTSTEXTILIEN

PROCEDE DE RECYCLAGE DE VETEMENTS ET DE LINGE DE MAISON USES

(84) Designated Contracting States:
**AT BE BG CH CY CZ DE DK EE ES FI FR GB GR HR HU IE IS IT LI LT LU LV MC MK MT NL NO PL PT RO SE SI SK TR**

(30) Priority: **03.06.2008 NL 1035521**

(43) Date of publication of application:
**06.04.2011 Bulletin 2011/14**

(73) Proprietor: **VIVE TEXTILE RECYCLING Spolka z.o.o.**
**25 663 Kielce (PL)**

(72) Inventor: **BINDER, Martin, Dave, Theodor**
**NL-3193 JK Hoogvliet (NL)**

(74) Representative: **Griebling, Onno**
**Octrooibureau Griebling BV**
**Sportweg 10**
**5037 AC Tilburg (NL)**

(56) References cited:
WO-A-00/29185          DE-A1- 1 943 243
DE-A1- 4 236 909        DE-A1- 4 409 335
DE-A1- 19 612 548       GB-A- 1 330 180
US-A1- 2006 006 564     US-A1- 2007 045 456

## Description

The present invention relates in general to recycling used clothing and domestic textile (towels, bed linens, etcetera). The method proposed by the present invention is however applicable with other starting materials.

It is known per se to collect used clothing and to recycle this to useful and commercially interesting products. This is happening at a large scale. Several commercial or charity institutions collect used clothing and domestic textile, such as the Salvation Army. A recycling company buys the collected goods from these collectors, wherein large companies are operating on European or even world scale. On a monthly basis, many millions of kilo's are involved. The used clothing comprises all types of products and raw materials, and processing thereof is largely an examination and sorting process, which may partly be automated but largely is manual labour: many hundreds of people are working with some companies operating in this area. The used clothing comprises for instance shoes, trousers, dresses, sweaters, shirts, etcetera. A sorting step comprises for instance sorting of still usable parts of clothing, for instance still usable shoes, still usable trousers, etcetera, and these can be sold as second hand clothes. Clothes which are no longer usable may be dissected and sorted on the basis of component material. For instance, the buttons and zippers of shirts and trousers may be separated from the textile material. The textile material may be distinguished on the basis of the type of material: there is textile from vegetable material (for instance cotton, hemp), there is textile from plastic (acryl, polyamide), there is textile from animal material (for instance wool, silk). Clothes and shoes may contain leather, and rubber (soles), and glue. The clothes may contain pollutions, such as dyes.

The entire sorting process may be executed in one single company, but it is also possible that a first company executes a preselection and that subsequent companies are specialized in further (fine) sorting of a part of the product stream.

The above only gives a global impression of the diversity of materials present in collected clothing. Furthermore, materials are found in collected clothing which actually do not belong there, such as used cleaning cloths including dirt and even waste material. The latter is an unpleasant exponent of the changed mentality in our society: where in the past the used cloth was offered neatly washed and ironed to the collector who came "door to door", nowadays collection containers are standing in many places where one can throw in the cloth anonymously, and where some people also think they should throw in their garbage.

In the end, many streams of material leave the sorting process, wherein the individual streams ideally have almost constant constitutions. The material streams can differ from each other for instance as regards constitution. Each material stream is characterized by a certain economical value and an associated commercial yield in relation to the costs of the sorting process. DE4409335 discloses that clothes consist of a mixture of various polymeric fibres. WO0029185 discloses a method for processing textiles which contain at least 11 % by weight of thermoplastic polymers. The textiles are heated to a temperature between the melting temperature of the thermoplastic polymers and the temperature of the thermal degradation of the thermoplastic polymers, so that the thermoplastic polymers contained in the textiles melt and fuse with the non-molten textile components, including impurities. The obtained mixture is heat-shaped by casting or compression molding and is then cooled. DE19612548 discloses a method for producing board materials, wherein domestic and industrial textile waste is chopped in a cutting mill to a defined grade, wherein the chopped material is mixed with a bonding agent, and wherein the raw material is compressed into a blank and then further compressed into a material with a strength and density of 500-1500 kg/m for finishing. DE1943243 discloses a pallet made by compression moulding of a foam combined with dry textile cuttings. GB1330180 discloses a pallet made by compression moulding of a resin combined with a mixture of dry fibre particles. Documents US 2007 045 456 A1 and US 2006 006 564 A1 disclose further process involving moulding a part using recycled textile fibres. It is an important aim of the present invention to further process at least some of the material streams produced in an economically profitable manner.

This problem is solved according to the invention by the method according to claim 1. These and other aspects, features and advantages of the present invention will be further clarified by the following description with reference to the drawings, in which same reference numerals indicate same or similar parts, and in which:

> figure 1 schematically illustrates the process streams of a sorting and processing process;
> figure 2 schematically illustrates the buffering of different products.

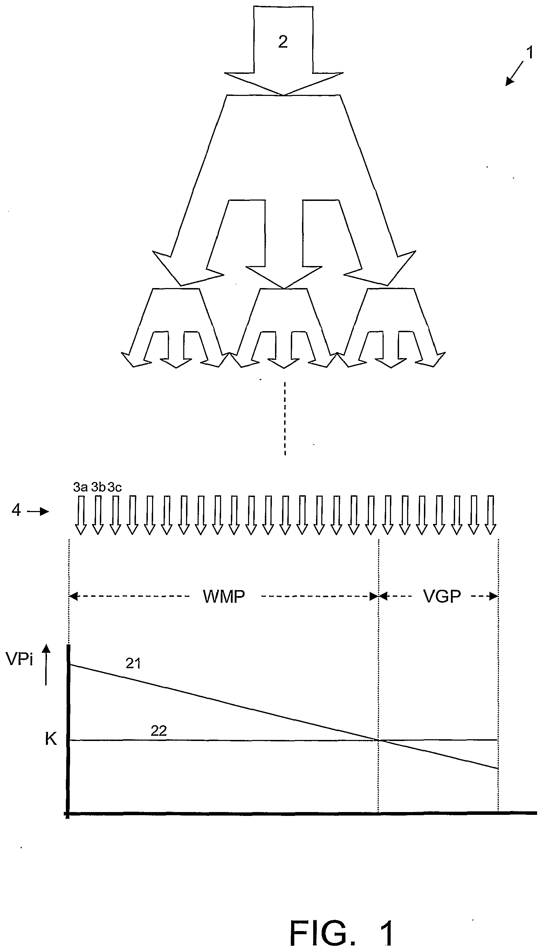

Figure 1 schematically illustrates the process streams of a sorting and processing process 1. Reference numeral 2 illustrates the incoming stream of used clothes. Reference numerals 3a, 3b, 3c etcetera illustrate that the processing process eventually results in an output with many different material streams, which each may be almost uniform in composition. The material streams may mutually differ as regards composition, purity, particle size, etcetera. In practice, the number of material streams obtained in this manner may be larger than 200.

It is noted that sorting and processing processes such as described in the above are known per se, and that the present invention is independent of the sorting and processing process used and can be applied in combination with any known or future sorting and processing process. Therefore, a further explanation of the sorting and processing process is not needed here.

The material in the several resulting or outgoing material streams 3a, 3b, 3c etcetera will hereinafter also be indicated by the phrase "product" 4a, 4b, 4c, etcetera. Whenever the material streams or the product, respectively, is meant in general, the distinctive additions a, b, c, etcetera will be left away.

The product 4 resulting from such sorting and processing process 1 can be used usefully to a lesser or larger extent, and therefore has an economical value which among other things is determined by the measure of usability. For instance, the value of the still useable clothes will be fairly high, but within this category the value of a cashmere sweater that has hardly been worn may be higher than the value of a cotton T-shirt. Further, there may for instance be products 4 that can be used for manufacturing cleaning cloths. In general, the economical value of the products 4 is expressed in price per kilogram (€/kg). Although the economical value of the products 4 also depends on marketing mechanisms such as supply and demand, a stable value is used in the following for calculation. In the following explanation, it will be assumed that the economical value of the products 4 is constant in time. Then, it is possible to sort or classify the products 4 on the basis of economical value. In the following explanation it will be assumed that the economical value of the products 4 decreases in the alphabetic order of the distinguishing additions a, b, c etcetera, in other words product 4a has the highest economical value, product 4b has a value equal to or lower than the value of product 4a, etcetera. In the graph of figure 1, this is illustrated as a down-sloping line corresponding to the several product streams 3a, 3b, 3c, etcetera. For sake of convenience, the down-sloping line 21 is shown as a straight line, but it may be clear that this is only for sake of illustration and in reality the line 21 may have a more unregular course.

The economical value of a certain product 4 is the price that market parties are prepared to pay for the product concerned, in other words the selling price for the producer of the products 4. It is noted that this value may be negative: if there is no demand for a certain product, the product concerned will have to be discharged as waste, and possibly the producer will even have to pay for discharging his waste products.

Furthermore, the entire production process costs money, it is to say the examining sorting, processing, etcetera, but also transport, storage etcetera, and possibly the producer will even have to pay for the clothes 2 received. All this can be expressed in a cost price, also per kilogram (€/kg). In the graph of figure 1, this is indicated as a horizontal line 22.

The total financial yield for the producer can be considered as the summation over all products of the selling price times the respective weight, expressed in a formula as:

$$A = \sum_i VP_i \cdot G_i$$

wherein A represents the total yield,
wherein i is an index indicating the several products,
wherein VPi indicates the selling price for product 4(i)
and wherein Gi indicates the weight of product 4(i).

The total financial costs for the producer can be considered to be the total cost price, expressed in a formula:

$$B = K \cdot G$$

wherein B represents the total costs,
wherein K indicates the cost price per kg,
and wherein G = ΣGi indicates the total weight.

Of course the above calculations may be refined.

For the producer the total process is economically efficient if A > B. Herein all products 4(i) for which applies that the selling price VPi is higher than K contribute to profit: these products will hereinafter also be indicated as profit making products WMP. Likewise it applies that all products 4(i) for which applies that the selling price VPi is smaller than K reduce the profit; these products will hereinafter also be indicated as loss making products VGP.

The situation is of course not that the producer can say that in future he no longer wishes to produce the loss making products VGP. After all, the producer has to wait and see what he receives as input, and then loss making products simply result. The producer necessarily must accept then that the yield of these products VGP is lower than the cost price or that he even has to pay money for discharging the products as waste.

It is not an aim of the present invention to improve the sorting and processing process resulting in the above described products. Aim of the present invention is to further process at least some of the loss making products in such a manner that a new useful product emerges with an increased economical value, wherein the increase of the value is higher than the additional costs for the added processing process.

The present invention is among other things based on the insight that the products produced contain the following raw material to a larger or lesser extent:

1] Cellulose. Much textile is made from vegetable material, such as for instance cotton, flax, hemp, which are cellulose-containing materials.
2] Acrylate. Many textiles are made from synthetic fibres, which are almost all manufactured from products or byproducts from the oilprocessing industry. Further, many clothing accessories are manufactured from plastic such as buttons, zippers, etcetera. Many existing plastics are for instance acryl, polypropylene, polyethelene, polyamide, elastomeres. Back to the basis, this always involves acrylate.

3] Rest material. The rest material can be distinguished as follows:

3A] Rest materials which are acceptable in a further processing, or may even be just desirable because of useful properties. The most important example in this category are proteins, which is the basis of clothes or textile on the basis of animal material, such as for instance leather and wool, wherein wool is occurring the most. Proteins give a product a certain extent of biological degradability, which may be desirable.

3B] Rest materials which in a further processing one wishes to exclude as much as possible. This actually concerns all materials not falling in the categories 1], 2] or 3A]. Particularly, this relates to metals (buttons, zippers, etcetera), rubber (for instance soles), glue, elastance (for instance elastic in collars and underwear), dyes, etcetera.

It is noted that the raw materials mentioned above, possibly in mutually different ratios, may be (and usually actually are) present in multiple of the said products. Thus, it is not the case that one product for instance consists of pure polyamide while an other product for instance consists of pure wool.

The present invention now proposes to further process one or more of the loss making products VGP (and possible even some of the profit making products WMP with only a small profit margin VP-K, if the value added by the method according to the present invention is higher than the costs of applying the present invention), as follows.

In an optional preparation step, materials which one explicitly does not want to maintain, such as for instance rubber, glue, elastic, may possibly may removed from the product.

In a first processing step, the product is reduced in size. For this purpose, use can be made of processes known per se, such as tearing, breaking, cutting. In the end, dry (fibre) particles result. With present techniques, it is possible that these particles have sizes in the order of 0.2 mm or smaller; with future techniques, it is maybe possible that the achievable sizes of the fibre particles are considerably smaller than 0.1 mm.

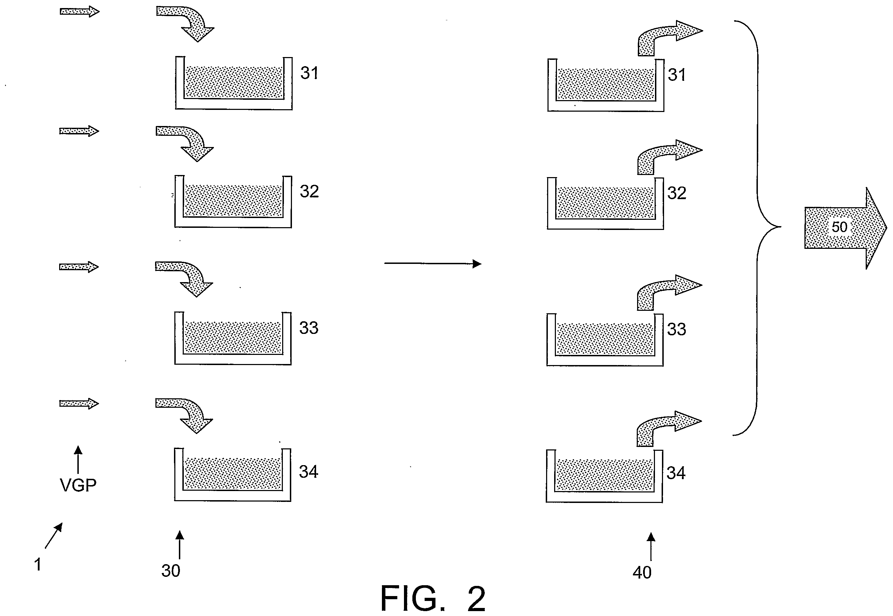

In a second processing step 30 (see figure 2), the product is buffered in one or more buffer containers 31, 32, 33, 34 etcetera. In this context, it is possible that the dry (fibre) particles of each product are buffered individually, but it is also possible that the dry (fibre) particles of two or more different products are buffered mixed with each other.

In a third processing step 40 (see figure 2), product is taken out of the buffer containers 31, 32, 33, 34, etc., and dry (fibre) particles from different buffer containers are mixed with each other. The mixing ratio is selected here in such a manner that a mixed product 50 results with a certain desired content of cellulose and a certain desired content of acrylate. For instance, if the content of cellulose of a certain product 4(i) is lower than desired, this can be compensated by mixing with a product 4(j) of which the content of cellulose is higher than desired. In this manner, both the product with insufficient cellulose and the product with **too** much cellulose can still be used.

It may be clear that the precise relative mixing ratios of the different products will depend on the circumstances, such as the actual contents of cellulose and acrylate per product, the desired total content of cellulose and acrylate which one wishes to obtain in the resulting mixed product 50, etc. Also, the actual extent of pollutions plays a role, in relation to a certain maximum of pollutions that one can accept in the resulting mixed product 50. The precise relative mixing ratios will in general be set by a computer.

In a fourth processing step, the mixed product obtained, which is still in the form of dry (fibre) particles, is mixed with a resin. There is some freedom of choice when choosing the resin to be applied.

The resin is added by bringing it in a liquid condition, that is to say by dissolving it in a suitable solvent. Preferably, in conjunction with environmental requirements, a water-carried resin is applied. The temperature is preferably increased above room temperature, for instance in the range of about 40-50 °C.

Adding the resin in liquid form is preferably done by spraying or vaporizing. The mixed product is placed on a supporting surface, preferably a transporter such as a conveyor belt, in the form of a layer of (fibre) particles. The resin is sprayed or vaporized above that, and the resulting vapour deposits on the particles wherein the layer of particles is humidified. A similar process is known as step in a process for manufacturing MDF plates, so that a more detailed description is omitted here.

The combination of resin and mixed product has a consistency comparable to moist soil, or peanuts humidified with syrup: at a small scale, solid particles can be distinguished, which stick together without being fixed with respect to each other; at a larger scale, sticky lumps are formed, which can be moulded to a desired shape thanks to the mutual displaceability of the solid particles.

In a fifth processing step, this sticky mass is pressed in a desired shape, and is maintained in this shape during a certain time and at a certain temperature and pressure, while the resin is hardening. The used shape may for instance be a plate shape, so that pressed plates are formed. The shape used may for instance also be the shape of a use product. In a special preferred embodiment, the use product is a pallet.

After sufficient hardening and drying, the products formed can be picked up and transported.

It is noted that the said use products produced in the afore-described manner are also suitable to be processed by the process proposed by the present invention, that is to say to be recycled.

Although the present invention is primarily intended to make recycling of used clothes and domestic textile economically more profitable, the method according to the present invention is also suitable for recycling of pallets, both pallets which are made as use product according to the present invention and existing pallets that are for instance made of wood (cellulose) or plastic (acrylate). Hereby, the present invention also provides a solution for a problem in the transport sector, that pallets, which are commonly used in container transport, must be discarded after use because they are or may be contaminated with poison that is used in the containers for killing vermin during the journey.

It will be clear to a person skilled in the art that the invention is not limited to the exemplary embodiments discussed in the above but that several variations and modifications are possible within the protective scope of the invention as defined in the attached claims.

In the above, the present invention is described from the perspective of an existing sorting and processing company, wherein this company wishes to increase the value of at least a part of its material stream (output). However, the invention can also be described from the perspective of a new company, buying material streams from an existing sorting and processing company to function as input. Here, the economical value of a material stream translates to a buying price for the new company, with the understanding that this new company can buy selectively and does not necessarily have to buy all material streams. Then, the new company is in fact an "ordinary" production company, buying raw materials in the market, which raw materials in that case do not necessarily have to originate from recycled clothes. Thus, the present invention also relates to a method for manufacturing formed products.

Features which have only been described for a certain embodiment can also be applied in other embodiments described. Features of different embodiments can be combined to obtain other embodiments. Features which have not explicitly been described as being essential can also be left away.

**Claims**

1. Method for recycling used clothes and domestic textile, which method comprises the steps of:

   - receiving an incoming stream of used clothes (2);
   - sorting the received used clothes (2) and subdividing the clothes received in a large number of mutually different material streams (3) of mutually different compositions, each material stream (3) being almost uniform in composition;
   - processing the various material streams (3) of mutually different compositions to produce mixed product (50) with a certain desired content of cellulose and a certain desired content of acrylate;
   wherein the step of processing includes:

      = a first processing step in which the material is reduced in size such as to result in dry fibre particles, wherein the dry fibre particles have sizes in the order of 0.2 mm or smaller;
      = a second processing step in which the dry fibre particles of each material stream are stored in buffer containers (31, 32, 33, 34), wherein the different products in the different buffer containers have mutually different contents of cellulose, acrylate and proteins;
      = a third processing step in which the dry fibre particles are taken out of different buffer containers (31, 32, 33, 34) and mixed with each other with a mixing ratio that is selected such that the obtained mixture has said certain desired content of cellulose and said certain desired content of acrylate;

   - mixing the mixed product (50) with a resin;
   - pressing the resulting mass in a desired shape;
   - allowing the mass pressed in shape to harden.

2. Method according to claim 1, wherein the step of reducing is executed by tearing and/or breaking and/or cutting.

**Patentansprüche**

1. Verfahren zum Recycling von gebrauchter Kleidung und Haustextilien, wobei das Verfahren die folgenden Schritte umfasst:

   - Empfangen eines eingehenden Stroms von gebrauchter Kleidung (2);
   - Sortieren der aufgenommenen gebrauchten Kleidung (2) und Unterteilen der aufgenommenen Kleidung in eine große Anzahl von voneinander verschiedenen Materialströmen (3) mit voneinander verschiedenen Zusammensetzungen, wobei jeder Materialstrom (3) nahezu gleichmäßig in der Zusammensetzung ist;
   - Verarbeiten der verschiedenen Materialströme (3) mit voneinander verschiedenen Zusammensetzungen, um ein gemischtes Produkt (50) mit einem bestimmten gewünschten Gehalt an Cellulose und einem bestimmten gewünschten Gehalt an Acrylat zu produzieren;

   wobei der Schritt des Verarbeitens Folgendes beinhaltet:

= einen ersten Verarbeitungsschritt, bei dem das Material so in seiner Größe reduziert wird, dass trockene Faserpartikel entstehen, wobei die trockenen Faserpartikel Größen in der Größenordnung von 0,2 mm oder kleiner aufweisen;
= einen zweiten Verarbeitungsschritt, in dem die trockenen Faserpartikel jedes Materialstroms in Pufferbehältern (31, 32, 33, 34) gelagert werden, wobei die verschiedenen Produkte in den verschiedenen Pufferbehältern gegenseitig unterschiedliche Gehalte an Cellulose, Acrylat und Proteinen aufweisen;
= einen dritten Verarbeitungsschritt, bei dem die trockenen Faserpartikel aus verschiedenen Pufferbehältern (31, 32, 33, 34) entnommen und mit einem Mischungsverhältnis miteinander vermischt werden, das so gewählt ist, dass die erhaltene Mischung den bestimmten gewünschten Gehalt an Cellulose und den bestimmten gewünschten Gehalt an Acrylat aufweist;

- Mischen des gemischten Produkts (50) mit einem Harz;
- Pressen der resultierenden Masse in eine gewünschte Form;
- wodurch die in Form gepresste Masse aushärten kann.

**2.** Verfahren nach Anspruch 1, wobei der Schritt des Reduzierens durch Reißen und/oder Brechen und/oder Schneiden ausgeführt wird.

**Revendications**

**1.** Procédé de recyclage de vêtements et de linge de maison usagés, le procédé comprenant les étapes, consistant à :

- recevoir un flux entrant de vêtements usagés (2) ;
- trier les vêtements usagés (2) reçus et subdiviser les vêtements reçus en un grand nombre de flux de matériaux (3) mutuellement différents de compositions mutuellement différentes, chaque flux de matériaux (3) étant de composition presque uniforme ;
- traiter les divers flux de matériaux (3) de compositions mutuellement différentes, pour produire un produit mélangé (50) avec une certaine teneur désirée en cellulose et une certaine teneur désirée en acrylate;

dans lequel l'étape de traitement comporte :

= une première étape de traitement, dans laquelle le matériau est de taille réduite, de manière à résulter en des particules de fibres sèches,
dans laquelle les particules de fibres sèches ont des dimensions de l'ordre de 0,2 mm ou moins ;
= une deuxième étape de traitement, dans laquelle les particules de fibres sèches de chaque flux de matériau sont stockées dans des réservoirs tampons (31, 32, 33, 34), dans laquelle les différents produits dans les différents réservoirs tampons ont des teneurs mutuellement différentes en cellulose, en acrylate et en protéines ;
= une troisième étape de traitement, dans laquelle les particules de fibres sèches sont extraites de différents réservoirs tampons (31, 32, 33, 34) et mélangés entre elles avec un rapport de mélange, qui est sélectionné de sorte que le mélange obtenu a ladite certaine teneur désirée en cellulose et ladite certaine teneur désirée en acrylate;

- mélanger le produit mélangé (50) avec une résine ;
- presser la masse résultante en une forme désirée ;
- permettre à la masse pressée en forme de durcir.

**2.** Procédé selon la revendication 1, dans lequel l'étape de réduction est exécutée en déchirant et / ou en cassant et / ou en coupant.

FIG. 1

FIG. 2

**EP 2 303 534 B1**

**REFERENCES CITED IN THE DESCRIPTION**

**Patent documents cited in the description**

- DE 4409335
- WO 0029185 A
- DE 19612548
- DE 1943243
- GB 1330180 A
- US 2007045456 A1
- US 2006006564 A1